# EUROPEAN PATENT SPECIFICATION

(11) **EP 1 132 145 B1**
(45) Date of publication and mention of the grant of the patent: **20.06.2007**
(21) Application number: 01500030.0
(22) Date of filing: 01.02.2001
(51) Int. Cl.: B05C 1/14, B05C 9/14

(54) **A method of manufacturing painted profiles from metallic strips and a corresponding machine**
Vorrichtung und Verfahren zur Herstellung von angestrichenen Profilen aus Metallbändern
Machine et procédé de fabrication de profilés peints à partir de bandes métalliques

(30) Priority: 02.02.2000 ES 200000210
(43) Date of publication of application: 12.09.2001
(73) Proprietor: Euroinstalaciones Caballero, S.L., 08980 Sant Feliu de Llobregat (Barcelona) (ES)
(72) Inventor: Caballero Garcia, Diego Luis, 08980 Sant Feliu de Llobregat(Barcelona) (ES)
(74) Representative: Urizar Anasagasti, Jesus Maria

(56) References cited:
- EP-A- 0 326 919
- WO-A-91/05660
- FR-A- 2 347 987
- US-A- 4 263 077

## Description

### Sector of the art to which the invention refers

The present invention refers to a method of manufacturing painted profiles from metallic strips and to the corresponding machine.

### Prior state of the art

Continuous painting by transfer of determinate products with an appreciably constant cross-section and great length, with a view to decorating them, is known. Also known is the execution of such continuous painting by pressure and heating, using a transfer material which includes a coat of paint supported and protected on its obverse side by a sheet of synthetic resin or film. Said material is applied with the reverse of the coat of the paint on the surface of the product to be painted, while both are passing through an application position in which the reverse of the coat of paint of the material is placed into direct contact with the surface of the product to be painted. The passage of the assembly between heating and pressure rollers determines that the coat of paint tends to be transferred from the film to the surface of the product to be painted. The film can separate from the anverse of the coat of paint and, therefore, from the assembly, in a later stage, leaving the product permanently painted by said coat of paint.

It should be pointed out that the transfer material (coat of paint + film) is a very specialised product in the market, which is presented in spools. The manufacturer of the final painted products usually acquires the transfer material from the few companies capable of producing it. Spools of transfer painting material may be obtained, for example, from Leonhard Kurz GmbH & Co, Fürth, Germany, with catalogue reference, Touchwood® SO-SR.

The art indicated above is applied successfully to products which are painted when they have already substantially received their final form, in cross-section, such as finished or almost finished profiles, strips or boards made of wood, shavings, fibre conglomerates, etc., or such as profiles made of synthetic resin, such as PVC or the like.

On the other hand, said art does not produce painted products of high quality in the case of strips or metallic profiles which, after applying the coat of paint, must be considerably distorted or folded to carry out continuous shaping which gives them the desired final cross-section. This happens, for example, in manufacturing using a strip of aluminium or its alloys, slats or other profiles for false ceilings or ceiling roses. In these cases, the metal of the strip has little adherence with respect to the paint which is transferred to it and, also, distortion of the strip once it is painted, during the continuous shaping, causes cracks in the coat of paint, especially in the fold areas, such as the edges of the slats, producing finished products which do not have a sufficient quality of painting.

The AVERY document WO 91/05660 describes a process for manufacturing molded plastic items including several steps: providing a spool of material including a support sheet which is neither metallic nor is it impregnated, providing a spool of a second material including a coat of paint adhering transitorily to a temporary detachable supporting and protective film; both strips are laminated together and since plastic is a material which becomes porous with temperature, when a suitable transfer temperature is applied to this material suitable adherence of the paint carried in the film to the plastic item to be decorated is obtained. If this process were applied to metals, particularly to laminated metals or very thin metallic strips, suitable adherence would not be obtained and the sheet or strip would furthermore be deformed; therefore and unlike this process, in the method of the present invention a primer coat is applied on the face of the strip that is to be painted in the final profile, prior to the application of the spool of the second material including a film, having a mild impregnation and having the paint adhered like any other conventional product; this methodology also differs from the AVERY process in that the temperature of the first material is increased up to a value of the same order or greater than that of the temperature of the final stage to achieve that the varnish being applied adheres before coming into contact with the film with the polyurethane paint and acquires adherence characteristics that allows its final fixing on a metal surface under conditions that are similar to when plastic or another porous material are involved.

### Inventor's objective

The inventor of the present invention set himself the task of providing a method and a machine by means of which, using transfer material of the type indicated above, metallic strips or profiles could be painted which, after applying the coat of paint, must undergo considerable distortion during a continuous shaping operation to obtain the desired final cross-section.

### Means proposed by the invention to achieve said objective

To do this, the invention consists of a method for manufacturing painted profiles from metallic strips characterised in that it includes the following stages:
a) providing a spool with a first material which includes a metallic strip and a primer coat on the side of the strip which must be painted in the finished profile;
b) providing a spool with a second material which includes a coat of paint, adhering transitorily to a temporary detachable supporting and protective film;
c) Making the first and second materials pass through together, in such a way that the primer coat of the first material and the coat of paint of the second material are juxtaposed and in mutual contact, while the assembly of materials undergoes heat and pressure so that the coat of paint adheres more strongly to the primer coat than to the film;
d) optionally, detaching and eliminating the film from the assembly of materials;
e) continuously shaping the assembly of materials, possibly without the film, to obtain the desired finished profile;
keeping the assembly of materials, possibly without the film, at a temperature which is essentially the same as that applied in stage c) until stage e) is completed.

In accordance with an optional characteristic of the invention, before stages a) and b), the corresponding spools undergo stabilising storage.

In accordance with another optional feature of the invention, before stage c) the temperature of the first material is raised to a value equal to, or higher than, the temperature of stage c).

In accordance with another optional feature of the invention, after stage e), the continuous profile undergoes a cutting operation into sections of predetermined length.

In accordance with another optional feature of the invention, after stage e), the continuous profile undergoes a cutting operation into sections of predetermined length and, optionally, a conventional varnishing or lacquering operation.

In accordance with another aspect of the invention, this includes a machine for carrying out the method of the foregoing paragraphs, characterised in that it includes:
i) means for making the first and second materials pass through together in such a way that the primer coat of the first material and the coat of paint of the second material are juxtaposed and in mutual contact;
ii) means for subjecting the assembly of materials to heat and pressure so that the coat of paint adheres more strongly to the primer coat than to the film;
iii) means for, optionally, detaching and eliminating the film from the assembly of materials;
iv) means for continuous shaping of the assembly of materials, optionally with or without the film, to obtain the desired final profile; and
v) means for maintaining the assembly of materials, possibly without the film, at a temperature essentially the same as that applied in stage c), until stage e) is completed.

According to another optional feature of the invention, before the point of contact between the first material and the second material, the machine includes a pre-heater of the first material.

According to another optional feature of the invention, the means (ii) for subjecting the assembly of units to heat and pressure include at least one heated cylinder press.

According to another optional feature of the invention, said means (ii) include two or more heated cylinder presses.

According to another optional feature of the invention, the means (iii) for, optionally, detaching and eliminating the film from the assembly of materials consists of a spooling roller.

According to another optional feature of the invention, the means (iv) for continuously shaping the assembly of materials, optionally with or without the film, include several successive pairs of shaping rollers.

According to another optional feature of the invention, the means (v) for maintaining the assembly of materials, possibly without the film, at a temperature essentially the same as that applied In stage c) until stage e) is completed, consist of a heater-softener and a re-heating apparatus.

According to another optional feature of the invention, the re-heating apparatus includes a blower, whose outlet is heated by a heater and distributed by means of nozzles over the assembly of materials, particularly close to the areas in which shaping is to take place.

According to another optional feature of the invention, the machine is arranged under controlled ambient conditions of temperature and humidity.

### Brief description of the content of the drawings

Other features and advantages will appear in the following supplement to the description, when it is considered with reference to the attached drawings, in which:
Fig. 1 represents, very diagrammatically, a segment of a section of profile or slat, with at least one part of its surface painted;
Fig. 2 is a cross-section, very enlarged, of one part of a metallic strip covered with a primer coat;
Fig. 3 is a cross-section, very enlarged, of one part of a coat of transfer paint, transitorily supported and adhering to an upper, temporary supporting and protective film;
Fig. 4 is a cross-section, very enlarged, of one part of a metallic strip, like that of fig. 1, covered by the coat of paint and the film of fig. 2;
Figs. 5A and 5B are diagrammatic elevational views which, considered as a whole and in the order indicated, represent the machine according to the invention.

### Detailed explanation of an embodiment of the invention

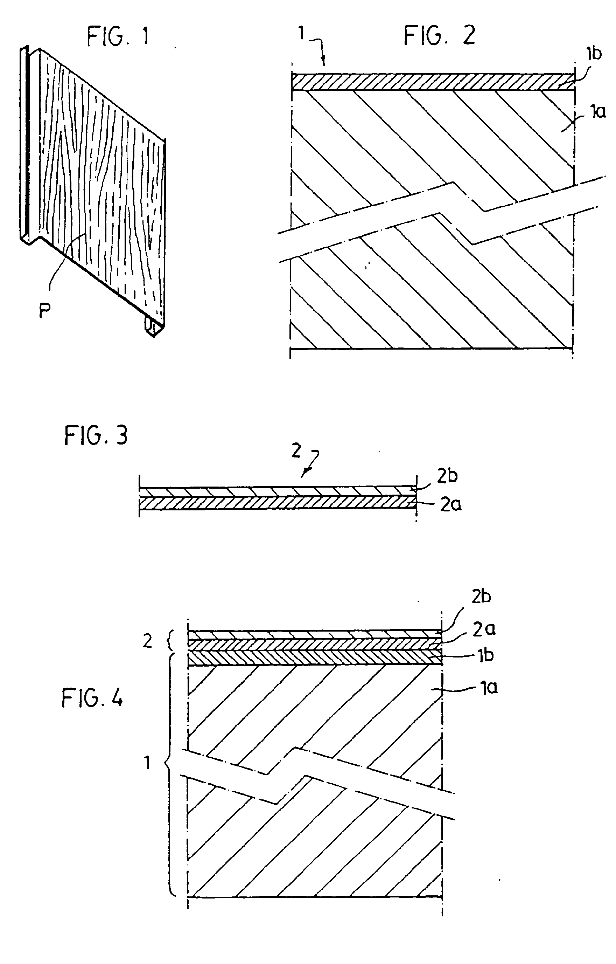

With reference firstly to fig. 1, this represents a segment of a section of a profile or slat P of the type to which the invention refers. The profile P is produced continuously by folding or continuous shaping from a flat metallic strip, and it may be seen that it includes pronounced folds (of 90° or even greater) corresponding with its different edges. At least an important part of the surfaces of profile P is painted, either with paint of uniform tone, or with any motif, for example an imitation of the grain of wood, stone, etc.

Figures 2-4 diagrammatically represent very enlarged sections corresponding to the components of profile P in different states of manufacture. According to fig. 2, the metallic strip 1a is covered on its anverse, that is on the side to be painted, by a primer coat 1b, constituting a first material 1 (=1a+1b). According to fig. 3, a coat of paint 2a adheres transitorily to a detachable film 2b of temporary support and protection, constituting a second material 2 (=2a+2b) of transfer painting. According to fig. 4, the juxtaposition of both the first 1 and second 2 materials gives rise to an assembly of materials (1+2=1a+1b+2a+2b) which make up the painted final profile.

The following clarifications must be made with respect to the above description. Firstly, although this has not been represented to avoid making the drawing difficult to understand, the interface surfaces should be represented as far more irregular and, particularly in fig. 4, the thickness of coats 1b and 2a could be less than those represented given that materials 1 and 2 have already been subjected to heat and pressure to make them adhere. Secondly, the film 2b always ends up being detached and eliminated from the final profile; sometimes, this elimination occurs immediately after the adhesion of the coat of paint 2a to the primer coat 1b, while at other times the film remains until the time comes to install the final profile, in order to protect the coat of paint 2a. Moreover, after detachment of the film 2b, a coat of lacquer or varnish may be applied using conventional techniques to the coat of paint 2a, which is not represented in figs. 2-4. Finally, the reverse, that is the side of the strip 1a opposite to that which receives the primer 1b, may have received, conventionally, a finishing covering, such as varnish or lacquer, by means of known techniques, which is not represented as it does not form part of the invention.

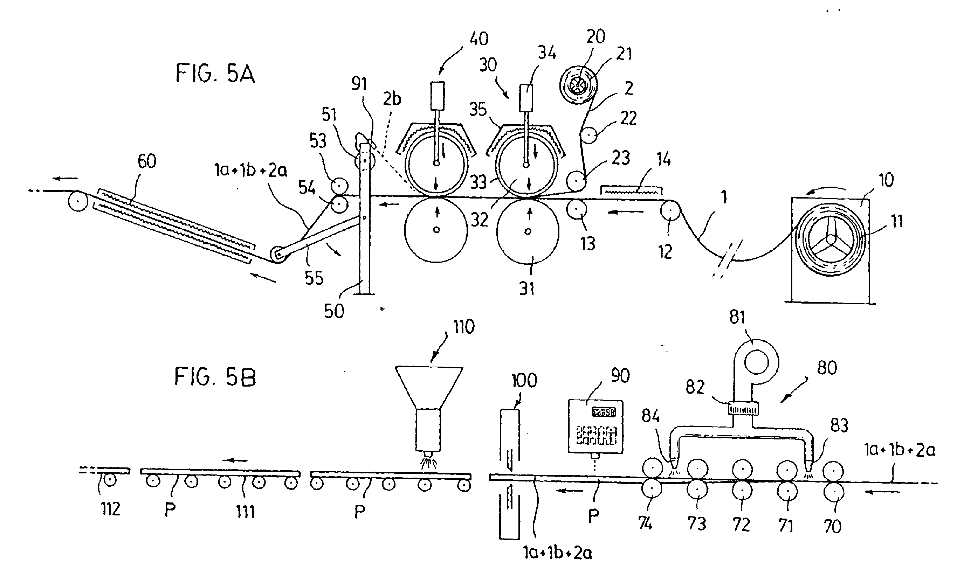

The continuous application of covering coats, such as varnishes, lacquers and paints, to metallic surfaces, such as continuous strips of aluminium or the like, in such a way that a varnished, lacquered or painted strip is continuously obtained, is a conventional technique, although it may require complex know-how and expensive installations. Given that for continuous application to metallic strips of the known varnishes, lacquers and paints and for continuous application of the primer coat 1b, whose use is recommended by the invention, it is possible to use the same known, general techniques and installations, the explanation of the invention will be on the basis of the use of spools of the first material 1 of fig.2, that is a metallic strip 1a, already covered by the primer coat 1b, without detailing the way in which this first material 1 is obtained. A spool of the first material 1 is represented in fig. 5a, with the reference 11.

It has already been stated that spools of the second material 2 can also be found in the market, for continuous painting of wooden or plastic profiles by transfer of the coat of paint 2a from the film 2b. In the known state of the art and in contrast to what occurs in the present invention, this second material 2 is applied directly to the surface to be painted, without interposing the primer coat 1b. Therefore, the explanation of the invention will be on the basis of the use of spools of the second material 2 of fig. 3, without detailing its conventional manufacture. A spool of the second material 2 is represented in fig. 5a, with the reference 21.

The machine represented in figs. 5a and 5b includes, in a conventional framework, of which only some elements are shown, a frame 10 for supporting the spool 11 of the first material 1 of fig. 2. The first material 1 passes, supported by the rollers 12 and 13, and with its primer coat 1b facing upwards, through a pre-heater 14.

The framework also includes a support 20 for a spool 21 of the second material 2 of fig. 3, which is taken by means of rollers 22 and 23 in such a way that it is juxtaposed with its coat of paint 2a facing upwards, to enter into contact with the primer coat 1a close to the entrance of a first cylinder press 30.

The press 30 includes a lower cylinder 31 and an upper cylinder 32 with a siliconized surface 33. The press 30 also includes a means of forcing the upper cylinder 32 against the lower one 31, a means which is represented by way of example in the embodiment illustrated, by means of a cylinder-piston system 34. The upper part of the press 30 is surrounded by a heating hood 35.

At the exit of the press 30, the assembly of materials 1 and 2 have substantially adopted the structure shown diagrammatically in fig. 4 (1a+1b+2a+2b), with the exception made previously with respect to the thickness and irregularity of the profiles.

The machine may include another or other additional presses, downstream from the cylinder press 30, which is exemplified by the press 40, which is identical or different in structure from the former. At the exit of the press 30 or 40, the framework includes a frame 50, with a roller 51 for detaching and collecting the film 2b. This detachment will necessarily tale place when the upper part of the coat of paint 2a must receive another surface finish, such as a final varnishing. In the event that it does not have to receive this, the film 2b may remain in the assembly of materials 1 and 2 to protect the painted profile until its final handling or preparation. In the case in question, we will assume that the film 2b is detached in the roller 51, in such a way that, as from the last press 30 or 40, the assembly of materials has the structure 1a+1b+2a.

The assembly 1a+1b+2a is fed, through rollers 53 and 54 and a compensating arm 55, into a heater-softener 60, in which the non-metallic coats and, especially, primer coat 1b and the coat of paint 2a are softened, without destroying the adherent interfaces.

Immediately after leaving the heater-softener 60, the assembly of materials 1a+1b+2a are introduced into a continuous shaping section made up of a succession of pairs of conventional shaping rollers 70, 71, 72, 73, 74, in which the assembly of material 1a+1b+2a, which until now has been maintained as a flat strip, progressively receives its definitive shape, for example, in the form of profile P of a slat for a false ceiling, with a general shape similar to that represented in fig. 1.

Over the profile shaping section a re-heating apparatus 80 is arranged which, in the embodiment represented, includes a blower 81, whose outlet is heated by a heater 82 and distributed by means of nozzles 83 and 84 over the material 1a+1b+2a, particularly close to the areas in which folding will take place (close to the edges of the profile P of fig. 1).

The machine includes, of course, a control panel 90 to control temperatures, pressures and speeds of work of each component, as well as detectors of these parameters and other devices, which are known in themselves, to determine the cutting length of sections of the continuously painted profile which leaves the continuous shaping section. In particular, the real temperature of the material may be read by laser scanner arranged at one or two points of the path, as represented by way of example in fig. 5A, with reference 91.

From the exit of the continuous shaping section, the profile P undergoes conventional treatments, such as the above-mentioned cutting into sections of determinate length in the shear 100, varnishing of the upper surface of the coat of paint 2a, which is shown in diagram in 110, and transport to storage by, for example, roller transporters 111 and 112.

Of course, the working conditions must be chosen so that they do not affect the desired properties of the metal, nor those of the paint. By way of non-restrictive example, in the case of profiles for false ceilings:
- the metallic strip 1a may be made of aluminium, with a thickness of 400-600 µm;
- the primer coat 1b has a thickness of 2-6 µm;
- the coat of paint 2a has a thickness of 2-5 µm;
- the film 2b has a thickness of 2-3 µm;
- the heating temperature of the pre-heater 14 is about 150-200 °C;
- the heating temperature in the presses 30, 40 is about 130-200 °C;
- the heating temperature in the heater-softener 60 is about 130-170 °C;
- the temperature of the outlet air at the nozzles 83 and 84 is about 120-200 °C;
- the operating pressure of the cylinder-piston system 34 is about 800 bar.

These values are only guidelines, as the differences between the batches of materials and variation in the ambient conditions of temperature and humidity may affect them to a great extent. Thus, it has been found advantageous that the materials 1 and 2 are fed to the machine after a period of storage in stabilisation chambers and that the machine itself is situated in an air-conditioned room, in which said ambient conditions may be controlled.

As indicated above, working with metal, as is conventional, in wood or in synthetic resins, the continuous shaping of metal after direct application of the coat of paint 2a to the surface of the metallic strip 1a caused tearing of the coat of paint 2a, so that metallic articles of high quality which were painted before continuous shaping to the final shape of the profile P, could not be manufactured, due to the poor quality (stretch marks, cracks, discontinuities) of the coat of paint 2a, especially next to the edges of the folds. On the other hand, the use of the thick primer coat 1b, treatment at high pressure and temperature throughout the process and, most especially, heating of the coats before and during continuous shaping allow profiles to be obtained which have been painted before reaching their final shape and which do not have surface defects due to the said shaping.

It will be understood that the foregoing description has been given only as an example, to allow comprehension of the underlying idea of the invention, and that many changes and modifications are possible in each of the elements described, without departing from the scope of the protection defined in the attached claims. Thus, the type, arrangement and number of the means of heating, pressure application and control can vary widely with respect to what is described and represented by way of example in the foregoing description (for example, one or several heating tunnels could be used instead of independent hoods) and the spatial positions and other contingent elements could be replaced by other positions or elements which are technically equivalent.

## Claims

1. A method of manufacturing painted profiles from metallic strips, **characterised in that** it includes the following stages:
a) providing a spool (11) with a first material (1) which includes a metallic strip (1a) ;
b) providing a spool (21) with a second material (2) which includes a coat of paint (2a), adhering transitorily to a temporary detachable supporting and protective film (2b);
c) Making the first (1) and second (2) materials pass through together, in such a way that the primer coat (1b) of the first material (1) and the coat of paint (2a) of the second material (2) are juxtaposed and in mutual contact, while the assembly of materials (1, 2) undergoes heat and pressure so that the coat of paint (2a) adheres more strongly to the primer coat (1b) than to the film (2b);
d) optionally, detaching and eliminating the film (2b) from the assembly of materials (1, 2);
e) continuously shaping the assembly of materials (1, 2), possibly without the film (2b), to obtain the desired finished profile;
keeping the assembly of materials (1, 2), possibly without the film (2b), at a temperature which is essentially the same as that applied in stage c) until stage e) is completed.

2. A method in accordance with claim 1, **characterised in that** the metallic strip (1) on which it is applied is aluminum having a thickness between 400-600 µm.

3. A method in accordance with claims 1 to 2, **characterised in that** the heating temperature prior to stage c) is of the order of 150°-200° C; the heating temperature in stage c) is of the order of 130°-200° C; and the heating temperature in stage e) is of the order of 130°-170° C.

4. A method, in accordance with one of the claims 1 to 3, **characterised in that**, after stage e), the continuous profile (1a+1b+2a+2b or 1a+1b+2a) undergoes an operation of cutting into predetermined lengths.

5. A method, in accordance with one of the claims 1 to 3, **characterised in that**, after stage e), the continuous profile (1a+1b+2a) undergoes an operation of cutting into predetermined lengths and, optionally, an operation of conventional varnishing or lacquering.

6. A machine for carrying out the method of one of the foregoing claims, **characterised in that** it includes:
i) means for making the first and second materials pass through together in such a way that the primer coat of the first material and the coat of paint of the second material are juxtaposed and in mutual contact;
ii) means for subjecting the assembly of materials (1, 2) to heat and pressure so that the coat of paint (2a) adheres more strongly to the primer coat (1b) than to the film (2b);
iii) means for, optionally, detaching and eliminating the film (2b) from the assembly of materials (1, 2);
iv) means for continuous shaping of the assembly of materials (1, 2), optionally with or without the film (2b), to obtain the desired final profile; and
v) means for maintaining the assembly of materials (1, 2), possibly without the film (2b), at a temperature essentially the same as that applied in stage c), until stage e) is completed;
**characterised in that**, before the point of contact between the first material and the second material, it includes a pre-heater (14) of the first material.

7. A machine, in accordance with one of the claims 6 and 7, **characterised in that** the means (ii) for subjecting the assembly of materials (1, 2) to heat and pressure Include at least one heated cylinder press.

8. A machine, in accordance with claim 8, **characterised in that** said means (ii) include two or more heated cylinder presses.

9. A machine, in accordance with one of the claims 6 to 9, **characterised in that** the means (iii) for, optionally, detaching and eliminating the film (2b) from the assembly of materials (1, 2) consist of a spooling roller (51).

10. A machine, in accordance with one of the claims 6 to 10, **characterised in that** the means (iv) for continuously shaping the assembly of materials (1, 2), optionally with or without the film (2b), include several successive pairs of shaping rollers (70-74).

11. A machine, in accordance with one of the claims 6 to 11, **characterised in that** the means (v) for maintaining the assembly of materials (1, 2) possibly without the film (2b), at a temperature essentially the same as that applied in stage c) until stage e) is completed, consist of a heater-softener (60) and a re-heating apparatus (80).

12. A machine, in accordance with one of the claims 6 to 12, **characterised in that** the re-heating apparatus (80) includes a blower (81) whose outlet is heated by a heater (82) and distributed by means of nozzles (83, 84) over the assembly of materials, particularly close to the areas in which shaping will take place (area of the edges of the profile P).

13. A machine, in accordance with one of the claims 6 to 12, **characterised in that** it is arranged under controlled ambient conditions of temperature and humidity.

## Patentansprüche

1. Verfahren für die Herstellung von angestrichenen Profilen aus Metallstreifen, **dadurch gekennzeichnet, dass** es die folgenden Phasen umfasst:
a) Bereitstellen einer Spule (11) mit einem ersten, ein Metallstreifen (1a) beinhaltendes Material (1);
b) Bereitstellen einer Spule (21) mit einem zweiten, ein sich vorübergehend an einer zeitweilig abnehmbaren Schutz- und Hilfsfolie (2b) haftender Farbanstrich (2a) beinhaltendes Material (2);
c) gemeinsames Durchführen des ersten (1) und zweiten (2) Materials, derart, dass der Grundanstrich (1b) des ersten Materials (1) und der Farbanstrich (2a) des zweiten Materials (2) nebeneinander gestellt und in gegenseitigem Kontakt sind, während die Materialanordnung (1, 2) Wärme und Druck ausgesetzt wird, damit der Farbanstrich (2a) stärker am Grundanstrich (1b) als an der Folie (2b) haftet;
d) wahlweise Ablösen und Eliminieren der Folie (2b) von der Materialanordung (1, 2);
e) kontinuierliches Formen der Materialanordung (1, 2), möglicherweise ohne Folie (2b), um das gewünschte Endprofil zu erhalten;
wobei die Materialanordung (1, 2), möglicherweise ohne Folie (2b), bei einer Temperatur die im Wesentlichen die Gleiche ist, wie die in der Phase c) angewandten, aufrechterhaltet wird, bis die Phase e) abgeschlossen ist.

2. Verfahren gemäß Anspruch 1, **dadurch gekennzeichnet, dass** der Metallstreifen (1) auf den es angewandt wird aus Aluminium ist und eine Dicke zwischen 400-600 µm aufweist.

3. Verfahren gemäß Ansprüche 1 bis 2, **dadurch gekennzeichnet, dass** die der Phase c) vorausgehende Heiztemperatur ungefähr 150°-200° C beträgt; die Heiztemperatur in der Phase c) ungefähr 130°-200° C beträgt; und die Heiztemperatur in der Phase e) ungefähr 130°-170° C beträgt.

4. Verfahren gemäß einem der Ansprüche 1 bis 3, **dadurch gekennzeichnet, dass** das kontinuierliche Profil (1a+1b+2a+2b oder 1a+1b+2a) nach der Phase e) einem Schneidvorgang in vorbestimmten Längen unterzogen wird.

5. Verfahren gemäß einem der Ansprüche 1 bis 3, **dadurch gekennzeichnet, dass** das kontinuierliche Profil (1a+1b+2a) nach der Phase e) einem Schneidvorgang in vorbestimmten Längen und wahlweise einem konventionellen Lasier- bwz. Lackiervorgang unterzogen wird.

6. Gerät zur Ausführung des Verfahrens gemäß einem der vorhergehenden Ansprüche, **dadurch gekennzeichnet, dass** es folgendes umfasst:
i)Mittel zum gemeinsamen Durchführen des ersten und zweiten Materials, so dass der Grundanstrich des ersten Materials und der Farbanstrich des zweiten Materials nebeneinander gestellt und in gegenseitigem Kontakt sind;
ii) Mittel zur Unterziehung der Materialanordung (1, 2) mit Wärme und Druck so dass der Farbanstrich (2a) stärker am Grundanstrich (1b) als an der Folie (2b) haftet; iii) Mittel zum wahlweise Ablösen und Eliminieren der Folie (2b) von der Materialanordung (1, 2);
iv) Mittel zum kontinuierlichen Formen der Materialanordung (1, 2), wahlweise mit oder ohne Folie (2b), um das gewünschte Endprofil zu erhalten; und
v)Mittel zur Aufrechterhaltung der Materialanordung (1, 2), möglicherweise ohne die Folie (2b), bei einer Temperatur die im Wesentlichen die Gleiche ist, wie die in der Phase c) angewandten, bis die Phase e) abgeschlossen ist;
**dadurch gekennzeichnet, dass** es dem Kontaktpunkt vorgelagert, zwischen dem ersten Material und dem zweiten Material einen Vorwärmer (14) für das erste Material umfasst.

7. Gerät gemäß einem der Ansprüche 6 und 7, **dadurch gekennzeichnet, dass** die Mittel (ii) zur Unterziehung der Materialanordung (1, 2) mit Wärme und Druck mindestens eine geheizte Zylinderpresse umfassen.

8. Gerät gemäß Anspruch 8, **dadurch gekennzeichnet, dass** diese Mittel (ii) eine oder mehrere geheizte Zylinderpressen umfassen.

9. Gerät gemäß einem der Ansprüche 6 bis 9, **dadurch gekennzeichnet, dass** die Mittel (iii) zum, wahlweise, Ablösen und Eliminieren der Folie (2b) von der Materialanordung (1, 2) aus einer Spulenrolle (51) bestehen.

10. Gerät gemäß einem der Ansprüche 6 bis 10, **dadurch gekennzeichnet, dass** die Mittel (iv) zum kontinuierlichen Formen der Materialanordung (1, 2), wahlweise mit oder ohne Folie (2b), verschiedene nacheinander folgenden Paare von Formrollen (70-74) umfassen.

11. Gerät gemäß einem der Ansprüche 6 bis 11, **dadurch gekennzeichnet, dass** die Mittel (v) zur Aufrechterhaltung der Materialanordung (1, 2), möglicherweise ohne Folie (2b), bei einer Temperatur die im Wesentlichen die Gleiche ist, wie die in der Phase c) angewandten, bis die Phase e) abgeschlossen ist, aus einem Erhitzer-Weichmacher (60) und einem Überhitzer (80) bestehen.

12. Gerät gemäß einem der Ansprüche 6 bis 12, **dadurch gekennzeichnet, dass** der Überhitzer (80) ein Gebläse (81) umfasst, dessen Austritt von einem Erhitzer (82) geheizt wird und mittels Düsen (83, 84) über die Materialanordung, besonders nahe der Zonen, wo das Formen stattfindet (Kantenzonen des Profils P), verteilt wird.

13. Gerät gemäß einem der Ansprüche 6 bis 12, **dadurch gekennzeichnet, dass** es unter kontrollierten Umgebungsbedingungen der Temperatur und Feuchtigkeit angeordnet wird.

## Revendications

1. Procédé de fabrication de profils peints à partir de bandes métalliques, **caractérisé en ce qu'**il inclut les étapes suivantes:
a) fournir une bobine (11) avec un premier matériau (1) comprenant une bande métallique (1a) ;
b) fournir une bobine (21) avec un second matériau (2) comprenant une couche de peinture (2a), adhérant transitoirement à un film de protection et de maintien (2b) détachable et provisoire;
c) faire passer le premier (1) et le second (2) matériau l'un sur l'autre, de façon à ce que la couche primaire (1b) du premier matériau (1) et la couche de peinture (2a) du second matériau (2) soient juxtaposées et en contact l'une avec l'autre, tandis que l'assemblage de matériaux (1, 2) est soumis à la chaleur et à la pression de façon à ce que la couche de peinture (2a) adhère plus fortement à la couche primaire (1b) qu'au film (2b) ;
d) éventuellement, détacher et enlever le film (2b) de l'assemblage de matériaux (1, 2);
e) mettre en forme de façon continue l'assemblage de matériaux (1, 2), éventuellement sans le film (2b), pour obtenir le profil définitif désiré;
en gardant l'assemblage de matériaux (1, 2), éventuellement sans le film (2b), à une température qui est essentiellement la même que celle appliquée à l'étape c) jusqu'à la fin de l'étape e).

2. Procédé selon la revendication 1, **caractérisé en ce que** la bande métallique (1) sur laquelle a lieu l'application est en aluminium d'une épaisseur de 400-600 µm.

3. Procédé selon les revendications 1 à 2, **caractérisé en ce que** la température de chauffage avant l'étape c) est de l'ordre de 150°-200° C; la température de chauffage pendant l'étape c) est de l'ordre de 130°-200° C; et la température de chauffage pendant l'étape e) est de l'ordre de 130°-170° C.

4. Procédé selon une des revendications 1 à 3, **caractérisé en ce que**, après l'étape e), le profil continu (1a+1b+2a+2b ou 1a+1b+2a) est soumis à une opération de coupe en des longueurs prédéterminées.

5. Procédé selon une des revendications 1 à 3, **caractérisé en ce que**, après l'étape e), le profil continu (la+lb+2a) est soumis à une opération de coupe en des longueurs prédéterminées et, éventuellement, à une opération de laquage ou de vernissage conventionnelle.

6. Dispositif pour réaliser le procédé de l'une des revendications précitées, **caractérisé en ce qu'**il inclut:
i) des moyens pour faire passer le premier et le second matériau l'un sur l'autre de façon à ce que la couche primaire du premier matériau et la couche de peinture du second matériau soient juxtaposées et en contact l'une avec l'autre;
ii) des moyens pour soumettre l'assemblage de matériaux (1, 2) à une chaleur et à une pression de façon à ce que la couche de peinture adhère plus fortement à la couche primaire (1b) qu'au film (2b);
iii) des moyens pour, éventuellement, détacher et enlever le film (2b) de l'assemblage de matériaux (1, 2);
iv) des moyens pour mettre en forme de façon continue l'assemblage de matériaux (1, 2), avec ou sans le film (2b), pour obtenir le profil final désiré; et
v) des moyens pour maintenir l'assemblage de matériaux (1, 2), éventuellement sans le film (2b), à une température qui soit essentiellement la même que celle appliquée durant l'étape c), jusqu'à la fin de l'étape e);
**caractérisé en ce que**, avant le point de contact entre le premier matériau et le second matériau, il inclut un préchauffeur (14) du premier matériau.

7. Dispositif selon l'une des revendications 6 et 7, **caractérisé en ce que** les moyens (ii) pour soumettre l'assemblage de matériaux (1, 2) à une chaleur et à une pression incluent au moins une presse à cylindre chauffé.

8. Dispositif selon la revendication 8, **caractérisé en ce que** lesdits moyens (ii) incluent deux presses à cylindre chauffé ou plus.

9. Dispositif selon l'une des revendications 6 à 9, **caractérisé en ce que** les moyens (iii) pour, éventuellement, détacher et enlever le film (2b) de l'assemblage de matériaux (1, 2) consistent en un rouleau de bobinage (51).

10. Dispositif selon l'une des revendications 6 à 10, **caractérisé en ce que** les moyens (iv) pour mettre en forme de façon continue l'assemblage de matériaux (1, 2), avec ou sans le film (2b), incluent plusieurs paires successives de rouleaux de bobinage (70-74).

11. Dispositif selon l'une des revendications 6 à 11, **caractérisé en ce que** les moyens (v) pour maintenir l'assemblage de matériaux (1, 2), éventuellement sans le film (2b), à une température qui soit essentiellement la même que celle appliquée durant l'étape c) jusqu'à ce que soit réalisée l'étape e), consistent en un régulateur de chaleur (60) et un appareil de réchauffage (80).

12. Dispositif selon l'une des revendications 6 à 12, **caractérisé en ce que** l'appareil de réchauffage (80) inclut un ventilateur (81) à la sortie duquel l'air est chauffé par un réchauffeur (82) et diffusé par le moyen de tuyaux (83, 84) sur tout l'assemblage de matériaux, en particulier près des zones qui seront mises en forme (zones des bordures du profil P).

13. Dispositif selon l'une des revendications 6 à 12, **caractérisé en ce qu'**il est agencé dans des conditions de température et d'humidité ambiantes contrôlées.
